# EUROPEAN PATENT SPECIFICATION

(11) **EP 1 587 289 B1**
(45) Date of publication and mention of the grant of the patent: **02.06.2010**
(21) Application number: 05005071.5
(22) Date of filing: 08.03.2005
(51) Int. Cl.: H04M 3/42, H04M 1/725

(54) **Method and system for realizing a network-based growth of an agent for mobile communication apparatus**
Verfahren und System zur Realisierung eines netzbasierten Wachstums eines Agents für Mobilkommunikationsgerät
Procédé et système pour réaliser une croissance d'un agent basée sur le réseau pour un appareil de communication mobile

(30) Priority: 13.04.2004 KR 2004025386
(43) Date of publication of application: 19.10.2005
(73) Proprietor: SAMSUNG ELECTRONICS CO., LTD., Suwon-si, Gyeonggi-do (KR)
(72) Inventor: Jang, Sang-Woon, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 1 396 984
- US-B1- 6 268 872

## Description

The present invention relates to a proactive user interface and a system and a method thereof, and more particularly to a user interface and a system and a method thereof for use with a mobile communication apparatus.

As the cell phone technology is growing more precise and complicated, the potential ranges of functions provided by the cell phones are being increased. However, it is common that a user interface provided with cell phones is not complicated but includes keypads for scrolling some simple menus, which are characteristic elements of the user interface. Herein, customers having spent a lot of money for a cell phone including features, e.g., a bell sound and other cell phone accessories desire customization, but the customization is still limited to a few functions of a cell phone. Further, current cell phones show insufficiency in custom/tailored functionalities, e.g., automatic personalization of a device user interface, etc., necessary for improving the use of a mobile information apparatus, and/or an ability of responding to user actions.

In addition, interfaces of personal computers' e.g., desktops or laptops, and user interfaces for other operating devices also show insufficient miniaturization as described above. These operating devices' interfaces can be customized only in a very simple manner. Such a customization must be performed by users, but users may not understand the functions of a computer or may be inconvenienced in performing such customizations. At present, it is impossible for the operating devices to learn action (motion) patterns of a user and adjust their operations according to this learned information, as in an adaptive system for user interface. When a user cannot select computer preferences, the computer does not automatically adjust its operation according to the user. Hence, the user must adjust his or her own action according to the computer functionality.

As described above, it has been necessary to construct an adaptive system for the user interface according to action patterns of the user. That is, in a proactive user interface for learning the action patterns of a user and adaptively performing an operation according to this learned information, on an operating device, has been required. The proactive user interface must learn the action patterns of a user and actively propose selective items to the user. Further, there is an increased necessity of an intelligent agent for mobile information apparatus capable of interacting with a person through an avatar (a variant phase or version of a continuing basic entity).

Accordingly, a proactive user interface, which can be optionally installed in any type of operating device, is provided. Such a proactive user interface actively proposes operating suggestions to a user on the basis of a previous experience with a specific user and/or pre-programmed multiple patterns. These suggestions can be selected by an operating device according to the action of a user. Otherwise, the proactive user interface takes part in a non-deterministic or unexpected behavior.

An agent for such a proactive user interface is an avatar-type agent. For instance, when such an agent is an avatar of a dog-shape, the concept of a DNA (deoxyribonucleic acid) is used for expressing various dog shapes. When an avatar is realized by means of such a DNA concept, growth and/or evolution of an agent expressed by the avatar can be easily realized. Details for this realization have been disclosed in detail in the United States Utility Patent Application Serial No.10/743,476, filed on September 5, 2003 by the applicant of the present patent application, and subsequent applications. Constructing an intelligent agent from a DNA structure relates to each gene and the value of the gene. Each building block value represents another genetic-type expressed in a constructed agent.

Basic building blocks of a visual agent are modeled as a plurality of prototypes. Accordingly, the number of prototypes dictates a visual range of each gene. Further, values of expressed genes independent of prototypes can be generated during the execution of a proactive user interface. For instance, since a color gene expression level may be calculated by indices at a platform color table, or a scale may also be calculated with respect to a host screen size, an agent of independent genetic-type can be generated from a predetermined prototype. Such a prototype agent is decomposed and a non-prototype agent is recomposed according to building block values of each element. For instance, in the case of a DNA value 16-prototype and a five-element version of an agent, five-elements have 16 possible genetic-types different from each other according to building block values of elements obtained from the number (16) of prototype models.

Since intelligent agents capable of being realized by such DNA version, can be expressed by 16 genetic-types different from each other with respect to five-elements, 1,048,576 agent combinations can be generated. That is, various agent combinations can be expressed, and the various agent combinations can be generated only by information on elements constituting the combination and information on a combination method of the elements. This point enables a user of each operating device actually to have an inherent type of agent due to the diversity of a combination method when an agent is used in a portable operating device.

Further, when the concept of a gene is used, growth or evolution of an agent can be easily realized. For instance, When the combination of first elements makes up an appearance of a younger agent and the combination of second elements makes up an appearance of a more grown-up agent, an appearance of automatic growth of an agent having the same genes according to the passage of a time may be accomplished. That is, after an agent is initially used, the agent automatically grows according to the passage of a time.

Accordingly, in order to express 1,048,576 agents, as described above, it is not always necessary to store data for 1,048,576 complete agents, but it is necessary to store data for the elements, e.g., 16 characteristic data with respect to each of five elements such as head, tail, leg, etc., of 80 (16x5) agents. This data is very small in size in comparison with the diversity of the 1,048,576 agent combinations that it provides. However, when the data require a large memory capacity like the 3D graphic data, a problem occurs. That is, a 7.5 Mb of memory is necessary in order to express the appearance of 1,048,576 agents as the 3D images. Further, in order to realize a function of growing agents, even by one step, only the 3D image data requires 15 Mb of memory.

Accordingly, in order to realize a growth function of agents, a memory having a capacity of at least 25 Mb is necessary in consideration of program data, etc. This code size is very large and is similar to that of the existing phone code. For instance, it is assumed that an agent version is 1.0, a growth step is a first step, a DNA code is [3], [5], [10], [13], and [0], and an agent's age (time passing after an agent is initialized) is 10 days. Then, since data of a second step of the growth step is stored, a memory of a data area for an agent uses 15 Mb. That is, an agent, which does not permit growth, requires an 8.5 Mb of memory, and adds data that is more than 7.5 Mb in growth of one step. In realizing a growth/evolution of an agent for a proactive user interface for general operating device or mobile communication apparatus, there exists a problem of limited memory capacity. In an apparatus having limited memory resources such as a cell phone as described above, a code size having such large size becomes a very heavy load. That is, when a growth step has many sub-steps, a larger size memory must be used.

As described above, In realizing a growth/evolution of an agent for a proactive user interface for general operating device or mobile communication apparatus, though the data having been necessary for an agent expression in a step before growth is not used again after realizing an agent growth, the data is stored in a memory, thereby causing the waste of a memory, which is a limited resource.

US-B1-6,268,872 discloses a system for calculating a growth or evolution mode of an agent for a corresponding user interface in a terminal. A server is shared with a terminal of another user to be provided with data of a shared virtual space. Both terminals have access to this virtual space in which the appearance of an avatar is sent to into a cyberspace as an alter ego of a user can be changed in its characteristics. Such characteristics are, for example, growth, mode, activity, intelligence, etc, and it is also possible to dynamically change the internal view of the corresponding avatar, comprising a shape, attitude, size, color, etc.

It is an object of the present invention to provide a method and apparatus for realizing a growth/evolution of an agent on the basis of a network or general personal computer for the efficient use of a memory in realizing the growth/evolution of the agent for a proactive user interface in a communication terminal.

This object is solved by the subject matter of the independent claims.

Preferred embodiments are defined by the subject matter of the dependent claims.

The above object and other aspects, features and advantages of the present invention will be more apparent from the following detailed description taken in conjunction with the accompanying drawings, in which:
FIG. 1 is a block diagram of an agent network system according to an embodiment of the present invention;
FIG. 2 is a diagram of a memory required when an agent growth/evolution mode is calculated in the terminal according to the present invention;
FIG. 3 is a diagram of a format structure of a data area of a short message for request of growth/evolution of an agent in a mobile terminal according to an embodiment of the present invention;
FIG. 4 is a flowchart of signals sent between a mobile terminal, an authentication device, and a server for performing a mutation generation request of an agent in an agent network system according to an embodiment of the present invention;
FIG. 5 is a flowchart of signals sent between a mobile terminal, an authentication device, and a server for performing a hybrid agent generation request of an agent in an agent network system according to an embodiment of the present invention;
FIG. 6 is a flowchart of signals sent between a mobile terminal, an authentication device, and a server for performing a mutation agent preview request of an agent in an agent network system according to an embodiment of the present invention; and
FIG. 7 is a flowchart of signals sent between a mobile terminal, an authentication device, and a server for performing a hybrid agent preview request of an agent in the agent network system according to an embodiment of the present invention.

Hereinafter, a preferred embodiment according to the present invention will be described with reference to the accompanying drawings. In the following description of the present invention, a detailed description of known functions and configuration incorporated herein will be omitted when it may make the subject matter of the present invention unclear.

The present invention relates to a system and a method for achieving growth/evolution of an intelligent agent for a mobile communication apparatus, which can interact with a user through an avatar. The aforementioned mobile communication apparatus, such as a cell phone or personal digital assistant (PDA), capable of achieving growth/evolution of an agent. In the present invention, such mobile information apparatus does not store all data for growth/evolution of an agent, it stores only data necessary for constituting a current agent or element data of an agent corresponding to a current growth step.

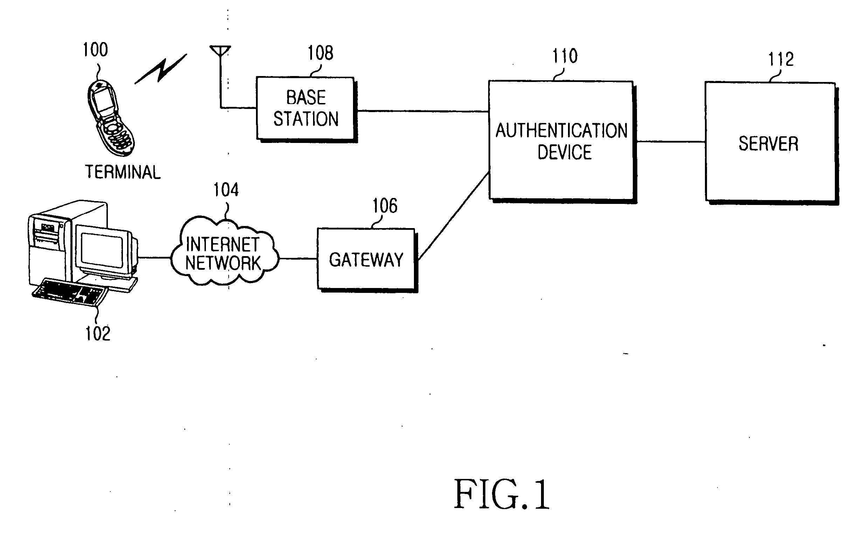

Hereinafter, a system for achieving a proactive user interface according to the present invention will be described with reference to FIG. 1. FIG. 1 is a block diagram of an agent network system according to an embodiment of the present invention.

Referring to FIG. 1, the agent network system includes a communication terminal 100 which is an apparatus capable of achieving growth/evolution of an agent, a base station 108, an authentication device 110 connected to the base station 108 to perform an authentication for the terminal 100, and a server 112. Further, the terminal 100 is connected to the authentication device 110 and the server 112 through a computer 102, the Internet network 104, and a gateway 106 by means of a data cable.

The terminal 100 can connect to the server 112 through the base station 108 by means of a short message service (SMS) or connect to the computer 102 through a data cable for terminal to connect to the server 112 through an Internet connection using the computer 102. In order for the terminal 100 to connect to the server 112 through the computer 102 as described above, dedicated software for data communication between the terminal 100 and the server 112 must be stored in the computer 102.

In the present invention, the terminal 100 stores only data necessary to constituting a current agent. Further, the terminal 100 may store only element data of an agent corresponding to a current growth step. A case in which a 16-prototype and a 5-element version of an agent DNA are optionally designated as follows. That is, it is assumed that "DNA0=[head0,0:15], [body0,0:15], [legs0,0:15], [hands0,0:15], [tail0,0:15] : 0<Tg<Tth" and "DNA0=[head1,0:15], [body1,0:15], [legs1,0:15], [hands1,0:15], [tail1,0:15] : Tg>=Tth". Herein, Tg represents a time period for which an agent has grown and Tth represents a critical time. Further, the critical time is set to be two weeks.

Then, when a time period for which an agent including the DNA0 has grown is within two weeks as described above, a selection is accomplished in a combination of first elements. In contrast, when the time period for which the agent including the DNA0 has grown is larger than two weeks, a selection is accomplished in a combination of second elements. When the combination of first elements makes up an appearance of a younger agent and the combination of second elements makes up an appearance of a more grown-up agent, an appearance of automatic growth of an agent having the same genes according to the passage of a time period may be calculated.

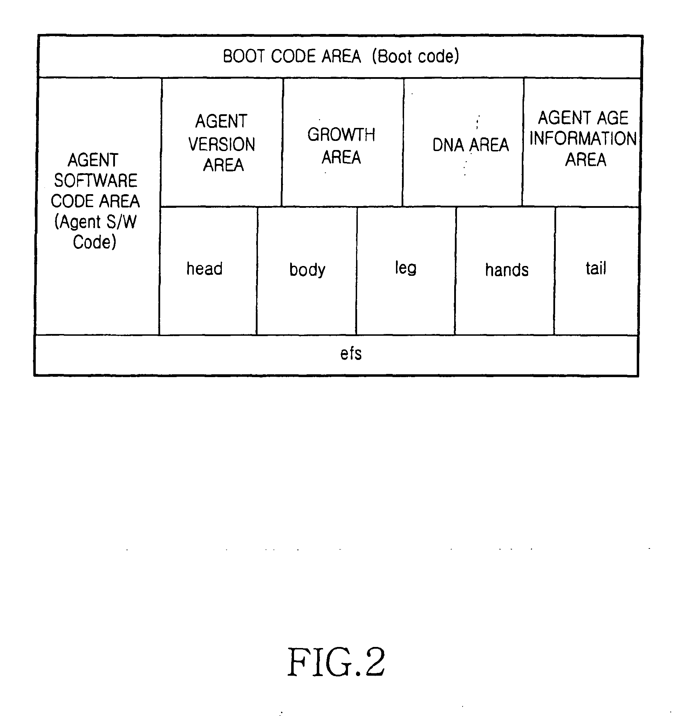

Herein, the terminal 100 stores only data necessary for constituting a current agent. This will be described with reference to FIG. 2. FIG. 2 is a diagram the structure of a memory required when an agent growth/evolution mode is calculated in the terminal 100 according to the present invention. Referring to FIG. 2, the memory for calculating a proactive user interface includes a boot code area, a data area described below, and an embedded file system (EFS), which is a firmware for typically controlling a terminal hardware. Herein, the data area includes a software code area for calculating an agent, an agent version area representing the version of an agent, a growth area representing the degree of growth, a DNA area representing a DNA composition, an agent age information area representing the age of an agent, and an area representing the appearance (e.g., head, body, leg, hands, tail) of an agent.

The terminal 100 does not store all data for growth required when an agent having the same genes automatically grows according to the passage of a time period, instead it stores only the data needed for calculating the appearance of the agent to be currently displayed, as shown in FIG. 2.

Then, when the agent has grown during a preset critical time, the terminal 100 calculates the appearance of growth of the agent through the server 112. In the above example, the critical time is set to be two weeks. However, the critical time is set according to the number of growth steps of the agent. Further, when the critical time has passed, the terminal 100 can calculate the growth/evolution of the agent through the server 112 by means of a short message service.

Herein, in a case in which the agent has grown during a preset critical time, when the terminal 100 calculates the appearance of growth of the agent through the server 112, it makes a request for data to the server 112 through a short message service, receives the data, and calculates the agent.

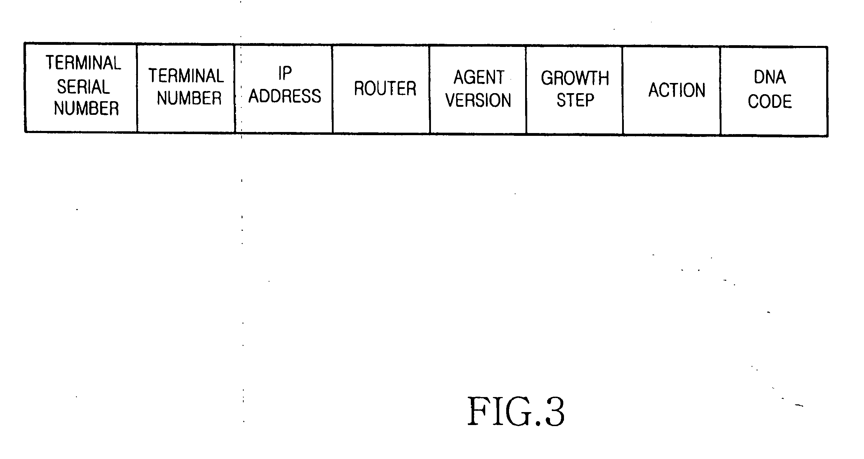

Hereinafter, the format structure of the data area of a short message for the growth/evolution of an agent, which is transmitted from the terminal 100 to the server 112, will be described with reference to FIG. 3. FIG. 3 is a diagram of the format structure of the data area of the short message for the growth/evolution of the agent, which is transmitted from the terminal 100, according to an embodiment of the present invention.

The short message service data transmitted from the terminal 100 to the server 112 includes a terminal serial number, a terminal number, an Internet Protocol (hereinafter, referred to as an IP) address, a router, an agent version, a growth step, an action, and a DNA code.

First, the terminal serial number is a serial number assigned to each terminal hardware unit by a manufacturer. When a terminal manufacturer provides an agent growth/evolution service, an authentication is performed through the terminal serial number, thereby preventing the use of a user, using a terminal produced/manufactured by another manufacturer, without permission. That is, when the terminal 100 transmits a short message as shown in FIG. 3 to the authentication device 110 for the agent growth/evolution service, the authentication device 110 determines the terminal serial number of the data area of the short message. Then, the authentication device 110 determines whether the corresponding terminal 100 having joined in the agent growth/evolution service, and performs an authentication process.

The terminal number is used when the server 112, an agent growth/evolution service provider, distinguishes the user terminal 100 receiving agent growth/evolution data through a wireless network. Further, such a terminal number may be used in identifying a user having requested a server connection when a wireless phone service provider provides the agent growth/evolution service.

The IP address represents the IP address of the user's personal computer 102 used for receiving the agent growth/evolution data. Such an IP address must be stored in the terminal 100 in advance. When the IP address is not stored in advance, the IP address is set to be "000.000.000.000", a user cannot receive the agent growth/evolution data in the personal computer 102. However, the user can receive the agent growth/evolution data by using the terminal 100.

The router designates a path through which a user receives the agent growth/evolution data. For instance, when a router value is set to 0, a terminal directly receives agent growth/evolution data through wireless communication. In contrast, when a router value is set to 1, agent growth/evolution data is received through the computer 102 having a corresponding IP address. Further, when the terminal 100 has set an IP address in advance, the value 1 cannot be set as a router value for receiving data through the computer 102.

The agent version is used in confirming the version of agent software and the version of a DNA code generated in the agent software. That is, the server 112 receiving the short message constructed, as shown in FIG. 3, confirms the version of an agent, and performs an update when the version of software currently used in the terminal 100 is lower than the version of a provided service.

The growth step represents the growth step of an agent when the agent grows in multiple steps. The action represents a movement requested by the user terminal 100 from the server 112 in the growth/evolution course of an agent. Such an action request of an agent includes a request by which the agent causes a mutation and a request for generating a hybrid agent with an agent used in a terminal of another user. Herein, the request for generating the hybrid agent with the agent used in the terminal of another user is called a hybrid request. Further, there exists a preview request for the agent mutation or the agent hybrid.

Herein, it may be impossible that the action of the agent requested by a user to be permitted according to the growth steps. For instance, when a user has requested a hybrid with another terminal agent with respect to an agent in a first growth step, it may be impossible for the movement requested by the user to be permitted for the reason of a low growth step. A server operator providing an agent growth service or a manufacturer of a terminal having an agent function can determine whether to permit a hybrid in a predetermined growth step. Preferably, a terminal manufacturer determines whether to permit a hybrid or not according to an agent version. Further, when a mutation of an agent by a request of a user or an agent generated by a hybrid agent generation request is more favorable, an agent is changed and thus is evolved/grown to match a user's taste.

The DNA code is a numeral/character sequence representing the DNA constituting an agent.

When a user makes a request for a growth/evolution request message to the server 112 through the personal computer 102, the user can make a request for a growth/evolution request message, which is similar to the short message data format construction shown in FIG. 3, to the server 112 via the Internet. In the above description, a case in which a user access to the server 112 through the terminal 100 has been described. However, when a user accesses the server 112 through the personal computer 102, IP data, which is similar to the short message data shown in FIG. 3, is transmitted.

The authentication device 110 stores information of a user requesting an agent growth/evolution service, when the agent growth/evolution service is permitted, that is, information of terminal having joined in the agent growth/evolution service. Further, the authentication device 110 performs an authentication process with respect to an authentication request of a corresponding terminal. For instance, the authentication device 110 stores the serial number of a terminal capable of requesting a service, a terminal phone number, etc. The server 112 stores data corresponding to the element of an agent according to versions and growth steps. When the terminal 100 transmits the short message, shown in FIG. 3, to the authentication device 110 for requesting the agent growth/evolution service, the authentication device 110 confirms a terminal serial number of the data area of the short message. Then, the authentication device 110 determines whether the corresponding terminal 100 has joined in the agent growth/evolution service and then performs an authentication process.

The server 112 provides the corresponding terminal 100 with action data of the agent requested by the user terminal 100. Herein, when the server 112 receives an image preview request from the terminal 100, the server 112 captures a conventional graphic image containing a shape of an agent of a type completed by an agent DNA combination, and then provides calculated image data to the corresponding terminal 100.

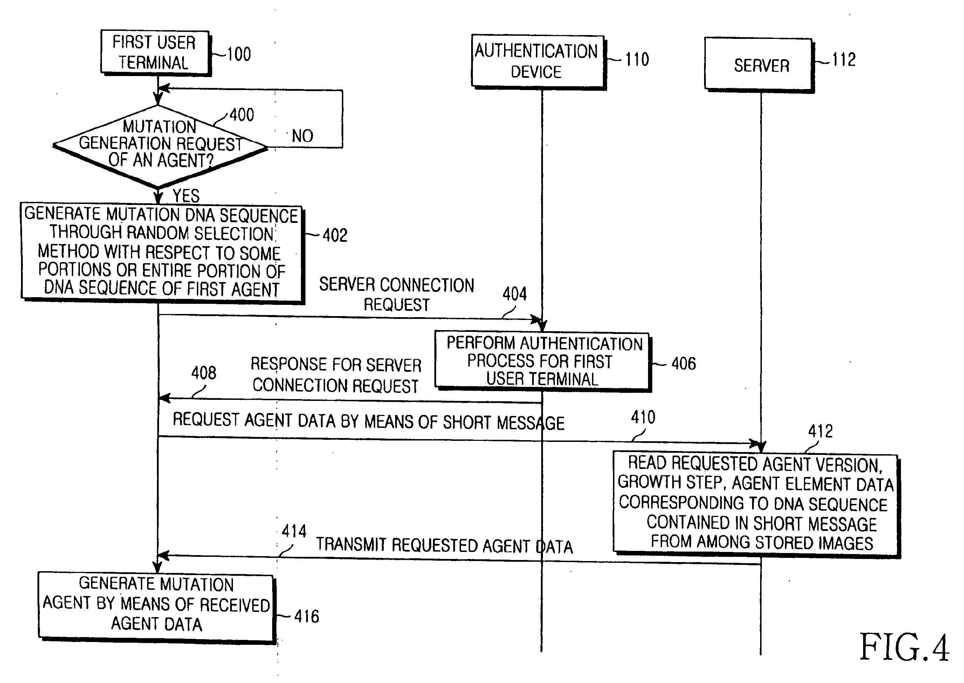

Hereinafter, a process for providing a service according to an agent growth/evolution request of a terminal in the agent network system constructed as shown in FIG. 1 will be described with reference to FIGs. 4 to 7.

FIG. 4 is a flowchart of signals sent between the mobile terminal 100, the authentication device 110, and the server 112 used for performing a mutation generation request of an agent in the agent network system according to an embodiment of the present invention. FIG. 4 illustrates a method by which the first user terminal 100 generates a new agent and shows a mutation generation request process of a first agent used in the terminal 100.

When step 400 determines that the mutation generation request of an agent is inputted from a user, a new DNA sequence generation step is performed in step 402. That is, when a mutation agent generation command is executed, the terminal 100 generates a mutation DNA sequence through a random selection method with respect to some portions or an entire portion of a DNA sequence of a first agent. Further, a DNA sequence for a mutation DNA sequence agent element may have any values. Then, in step 404, the terminal 100 transmits a short message for a server connection request to the authentication device 110, and the transmitted short message has the construction, shown in FIG. 3. In step 406, the authentication device 110 performs an authentication process for the terminal 100 for an agent growth/evolution with respect to the server connection request transmitted from the terminal 100. Herein, a terminal serial number or a terminal phone number may be used in the authentication process for the user terminal 100. In step 408, the authentication device 110 transmits a response message for the server connection request to the first user terminal 100. Herein, when an agent preview command of a user is transmitted and then a mutation/hybrid agent generation command is requested again, which will be described later, steps 404 and 406 may be omitted. That is, when a connection is maintained after an authentication process has been performed once, steps 404 and 406 may be omitted.

In step 410, the first user terminal 100 makes a request for mutation agent data to the server 112 by means of a short message, and the transmitted short message has the construction, shown in FIG. 3. The server 112 analyzes the short message received from the first user terminal 100. Then, in step 412, the server 112 reads an agent version, a growth step, agent element data corresponding to a DNA sequence contained in the short message from among agent images stored in advance. Then, the server 112 transmits the requested mutation agent data to the first user terminal 100 in step 414 and the first user terminal 100 generates a mutation agent by means of the received agent data in step 416.

In the present invention as described above, the terminal 100 makes a request to the server 112 for agent data and receives the agent data from the server 112, thereby calculating an agent of the terminal 100.

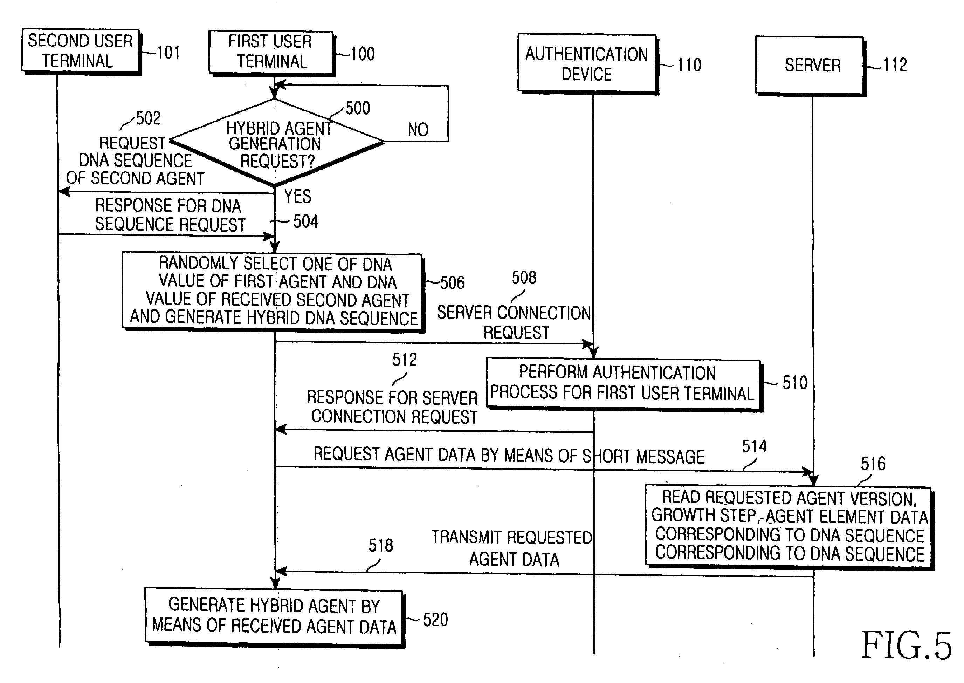

FIG. 5 is a flowchart of signals sent between the mobile terminal 100, the authentication device 110, and the server 112 used for performing a hybrid agent generation request of an agent in the agent network system according to an embodiment of the present invention. Hereinafter, the flow of signals sent between the first user terminal 100, a second user terminal 101, and the server 112 according to the hybrid agent generation request will be described with reference to FIG. 5. Herein, it is assumed that the first user terminal 100 requests a hybrid agent from an agent of the second user terminal 101.

First, in step 500 it is determined that when the hybrid agent generation request is inputted from a user, the first user terminal 100 makes a request for the DNA sequence of a second agent used in the second user terminal 101 to the second user terminal 101 for the hybrid agent generation, in step 502. Herein, when the user of the second user terminal 101 having received the DNA sequence request refuses a response for the DNA sequence request, the procedure ends. In contrast, when the user of the second user terminal 101 permits the DNA sequence request, the second user terminal 101 transmits the response data for the DNA sequence request in step 504, and the transmitted data is transmitted in a short message type.

In step 506, the first user terminal 100 having received the DNA sequence of the second agent contained in the short message randomly selects one of the DNA value of the first agent of the first user terminal 100 and the DNA value of the received second agent, and generates a hybrid DNA sequence. For instance, when the DNA sequence of the first agent is [3], [5], [10], [13], and [0] and the DNA sequence of the second agent is [3], [7], [1], [13], and [11], the DNA sequence of a generated hybrid agent becomes [3], [5 or 7], [1 or 10], [13], and [0 or 11].

Further, steps 508, 510, 512, 514, 516, 518, and 520 perform the same processes as steps 404, 406, 408, 410, 412, 414, and 416, described with reference to FIG. 4. That is, in steps 508, 510, 512, 514, 516, 518, and 520, the first user terminal 100 undergoes an authentication by the authentication device 110, makes a request for agent data from the server 112, receives the agent data from the server 112, and generates the hybrid agent.

As described above, the terminal 100 does not store agent data for every DNA, but stores only current agent data. Further, the terminal 100 makes a request for the agent data for an agent growth/evolution to the server 112, receives the agent data, and then calculates an agent.

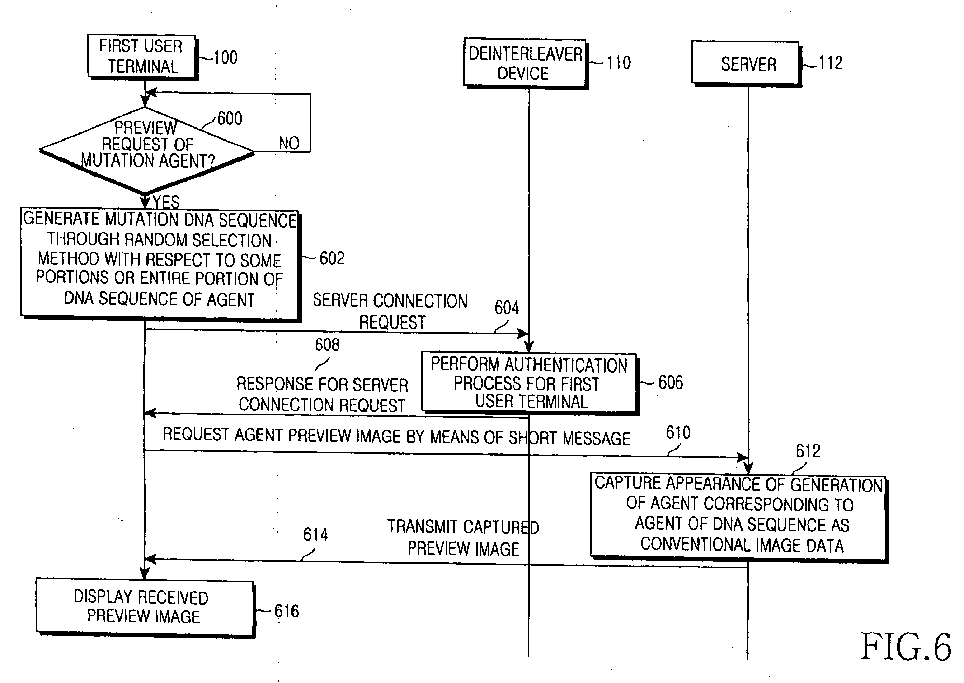

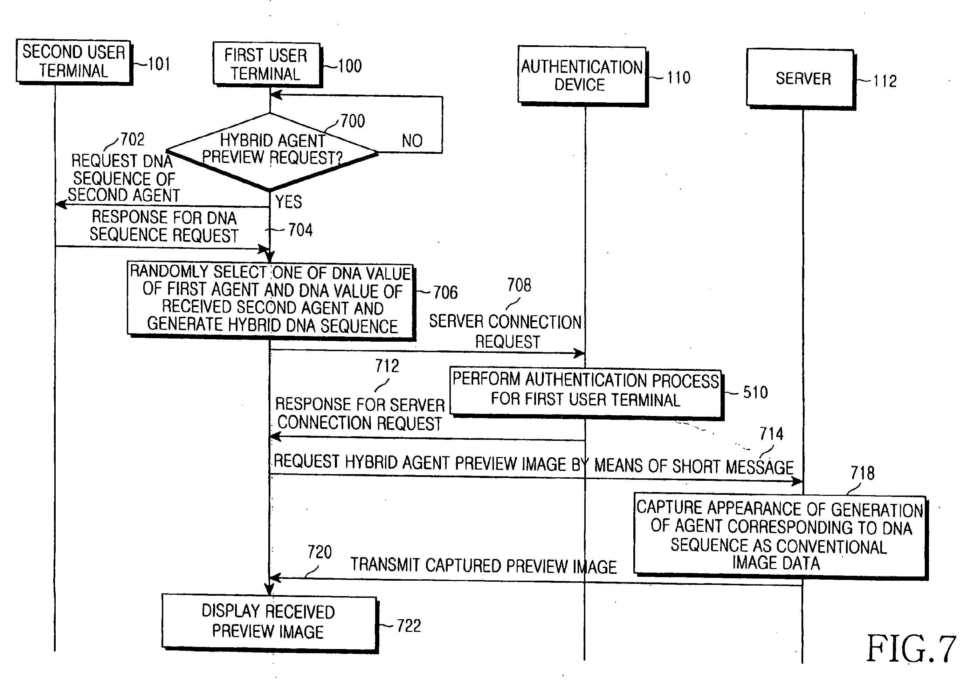

Hereinafter, the flow of signals sent between the terminal 100 and the server 112 when the terminal 100 requests a preview for the aforementioned mutation or hybrid agent will be described with reference to FIGs. 6 and 7. FIG. 6 is a flowchart of signals sent between the mobile terminal, the authentication device, and the server for performing a mutation agent preview request of an agent in the agent network system according to an embodiment of the present invention. First, the flow of signals sent between the terminal 100 and the server 112 when there exists a preview request for the mutation agent will be described with reference to FIG. 6.

First, when it is determined in step 600 that the user of the first user terminal 100 makes a request for the preview request for the mutation agent, the first user terminal 100 generates a mutation DNA sequence through a random selection method with respect to some portions or an entire portion of a DNA sequence of an agent. Then, authentication processes for connection to the server are performed in steps 604, 606, and 608. Then, in step 610, the first user terminal 100 makes a request for an agent preview image to the server 112 by means of the short message having the data format, shown in FIG. 3. The server 112 having received the short message captures an appearance of generation of an agent corresponding to an agent of a DNA sequence requested by the first user terminal 100 as conventional image data in step 612. Then, the server 112 transmits the captured preview agent image to the first user terminal 100 in step 614, and the first user terminal 100 receives the preview agent image. Then, the first user terminal 100 displays the received preview agent image in step 616.

FIG. 7 is a flowchart of signals sent between the mobile terminal 100, the authentication device 110, and the server 112 used for performing a hybrid agent preview request of an agent in the agent network system according to an embodiment of the present invention. Hereinafter, the flow of signals sent between the first user terminal 100, the second user terminal 101, authentication device 110 and the server 112 when the user of the first user terminal 100 requests a preview for a hybrid agent with the agent of the second user terminal 101 will be described with reference to FIG. 7.

First, when there exists a hybrid agent preview request from the user of the first user terminal 100 in step 700, step 702 is performed. That is, the first user terminal 100 requests the DNA sequence of a second agent. Then, in step 704, the second user terminal 101 having the hybrid agent preview request provides the DNA sequence of the second agent to the first user terminal 100 when the user of the second user terminal 101 consents the hybrid agent preview request. Then, the first user terminal 100 randomly selects one of the DNA value of a first agent and the DNA value of the second agent, and generates a hybrid DNA sequence. Then, the first user terminal 100 undergoes an authentication by the authentication device 110 in steps 708, 710, and 712. In step 714, the first user terminal 100 makes a request for a hybrid agent preview image to the server 112 by means of a short message. The server 112 having received the short message captures an appearance of generation of an agent corresponding to a DNA sequence as conventional image data in step 718. Then, the server 112 transmits the captured preview image to the first user terminal 100 in step 720. Then, the first user terminal 100 displays the received preview image in step 722.

In the prior art, when an agent growth step increases even by only one step, 15 Mb of agent data is required. However, according to the present invention, since an agent needs 93.75Kb [=7.5 Mb/(16*5)] per one element, data storage area of 468.75Kb (93.75Kbx5) and a wireless/wired data transmission/reception are required even though all elements of an agent are changed due to a mutation. In the case of the hybrid agent as described above, the hybrid agent can be generated through transmission/reception of data smaller than the aforementioned amount of data.

In the case of a preview command, a server captures the appearance of a completed agent as conventional image data and transmits the captured preview image to a user. Herein, since the conventional image data require only several tens Kb, data exchanged between a server and a terminal for execution of the preview command can be reduced.

According to the present invention, a terminal receives and displays an image for a mutation/hybrid agent preview request, the terminal makes a request for data of an agent to a server again so that a user sets the image as a preview agent image. Then, the terminal can receive corresponding agent data and set an agent.

As described above, according to the present invention, since a terminal stores only data necessary for calculating a current agent, and receives data for calculating growth/evolution of an agent from a server for the growth/evolution of the agent, a limited memory of the mobile terminal can be efficiently used.

Further, according to the present invention, in the case of an agent preview command, a server captures the appearance of a completed agent as conventional image data and transmits the captured preview image to a user. Therefore, the size of data exchanged between a server and a terminal for execution of the preview command can be reduced.

As described above, according to the present invention, a terminal stores only data for constituting a current agent. Further, in calculating the growth/evolution mode of an agent, the terminal receives agent data from a server storing data corresponding to elements of the agent according to versions and growth steps, thereby calculating the growth/evolution of the agent. In addition, the terminal receives data, which is obtained by capturing a shape of an agent of a type completed by an agent DNA combination with a conventional graphic image, from the server, thereby accomplishing the preview of an agent.

While the invention has been shown and described with reference to certain preferred embodiments thereof, it will be understood by those skilled in the art that various changes in form and details may be made therein without departing from the scope of the invention as defined by the appended claims.

## Claims

1. A system for calculating a growth/evolution mode of an agent for a proactive user interface in a terminal (100), where the interface is used for learning the action patterns of a user and for adaptively performing an operation according to the learned information, the system comprising:
a server (112) for storing data corresponding to elements of the agent according to its versions and growth steps and providing the terminal (100) with element data of a corresponding agent when the terminal makes a request for the data corresponding to elements of the agent in the current growth/evolution step; and
the terminal (100) for making a request for the data from the agent, the data corresponding to elements of the agent in the current growth/evolution step of the agent, means of a short message, to the server and receiving the data of elements of the agent in current growth/evolution step from the server, thereby allowing calculating the growth/evolution mode of the agent.

2. The system as claimed in claim 1, wherein the terminal (100) stores data for constituting a current agent.

3. The system as claimed in claim 1 or 2, further comprising an authentication device (110) disposed between the terminal (100) and the server (112), the authentication device authenticating the terminal when the terminal makes a request for the data of the agent to the server.

4. The system as claimed in claim 1, wherein the short message comprises a data area including an agent version, an agent growth step, and a DNA code constituting an agent.

5. The system as claimed in claim 4, wherein the short message further comprises a router representing an IP address of a computer receiving the data of the agent and a path through which the data of the agent is provided.

6. The system as claimed in claim 5, wherein the IP address is set to have a value of 000.000.000.000 and the router is set to have a value of 0 when the terminal makes a request for the data of the agent to the server.

7. The system as claimed in claim 4, wherein the agent growth step includes properties of a mutation agent generation, a hybrid agent generation with an agent used in another terminal, and a preview of the mutation agent and the hybrid agent.

8. The system as claimed in claim 7, wherein a user of the terminal (100) selects properties of a mutation agent generation, a hybrid agent generation with an agent used in another terminal, and a preview of the mutation agent and the hybrid agent of the agent growth step.

9. The system as claimed in one of claims 1 to 8, wherein, in a mutation agent generation, the terminal (100) generates a mutation DNA sequence through a random selection method with respect to some portions or an entire DNA sequence of the agent, and requests data of an agent having the mutation DNA sequence.

10. The system as claimed in one of claims 1 to 8, wherein, in a hybrid agent generation, the terminal (100) receives a DNA sequence of a second agent, which is used in generating the hybrid agent together with the agent, randomly selects one a DNA value of the agent and the received DNA value of the second agent, generates a hybrid DNA sequence, and requests data of an agent having the generated hybrid agent DNA sequence.

11. The system as claimed in one of claims 1 to 8, wherein, when a preview request of an agent is inputted from the terminal, the server provides the terminal with data obtained by capturing a shape of an agent of a type completed by a corresponding agent DNA combination as a conventional graphic image.

12. A method for calculating a growth/evolution mode of an agent for a proactive user interface in a terminal, where the interface is used for learning the action patterns of a user and for adaptively performing an operation according to the learned information the method comprising the steps of:
preparing a server (112) for storing data corresponding to elements of the agent according to versions and growth steps;
requesting the data (410, 514, 610) corresponding to elements of the agent in its current growth/evolution step by means of a short message, to the server (112);
providing (414, 518) the terminal (100) with element data of the corresponding agent when the terminal makes a request for the data of elements of the agent in current growth/evolution step;
receiving the data corresponding to elements of the agent in current growth/evolution step of the agent from the server; and
calculating the growth/evolution mode of the agent.

13. The method as claimed in claim 12, wherein the short message comprises a data area containing an agent version, an agent growth step, a DNA code constituting an agent.

14. The method as claimed in claim 13, wherein the short message further comprises a router representing an IP address of a computer receiving the data of the agent and a path through which the data of the agent is provided.

15. The method as claimed in claim 14, wherein the IP address is set to have a value of 000.000.000.000 and the router is set to have a value of 0 when the terminal makes a request for the data of the agent to the server.

16. The method as claimed in claim 13, wherein the growth step includes properties of a mutation agent generation, a hybrid agent generation with an agent used in another terminal, and a preview of the mutation agent and the hybrid agent.

17. The method as claimed in claim 16, wherein a user of the terminal selects the properties of a mutation agent generation, a hybrid agent generation with an agent used in another terminal, and a preview of the mutation agent and the hybrid agent of the agent growth step.

18. The method as claimed in one of claims 12 to 17, wherein, in a mutation agent generation, the terminal generates a mutation DNA sequence through a random selection method with respect to some portions or an entire portion of a DNA sequence of the agent, and requests data of an agent having the mutation DNA sequence.

19. The method as claimed in one of claims 12 to 17, wherein, in a hybrid agent generation, the terminal receives a DNA sequence of a second agent, which is used in generating the hybrid agent together with the agent, randomly selects one a DNA value of the agent and the received DNA value of the second agent, generates a hybrid DNA sequence, and requests data of an agent having the generated hybrid agent DNA sequence.

20. The method as claimed in one of claims 12 to 17, wherein, when a preview request of an agent is inputted from the terminal, the server provides the terminal with data obtained by capturing a shape of an agent of a type completed by a corresponding agent DNA combination as a conventional graphic image.

## Patentansprüche

1. System zum Berechnen eines Wachstums-/Entwicklungs-Modus eines Agenten für eine proaktive Benutzerschnittstelle in einem Endgerät (100), wobei die Schnittstelle dazu verwendet wird, die Aktionsmuster eines Benutzers zu lernen und adaptiv einen Vorgang entsprechend der erlernten Informationen durchzuführen, wobei das System umfasst:
einen Server (112) zum Speichern von Daten, die Elementen des Agenten entsprechen, gemäß dessen Versionen und Wachstumsschritten und zum Versorgen des Endgeräts (100) mit Elementdaten eines entsprechenden Agenten, wenn das Endgerät eine Anforderung nach den Daten stellt, die Elementen des Agenten im aktuellen Wachstums-/Entwicklungsschritt entsprechen; und
das Endgerät (100) zum Stellen einer Anforderung nach den Daten von dem Agenten, wobei die Daten Elementen des Agenten in dem aktuellen Wachstums-/Entwicklungsschritt des Agenten entsprechen, mithilfe einer Kurznachricht an den Server und zum Empfangen der Daten von Elementen des Agenten im aktuellen Wachstums-/Entwicklungsschritt von dem Server, wodurch eine Berechnung des Wachstums-/Entwicklungs-Modus ermöglicht wird.

2. System nach Anspruch 1, wobei das Endgerät (100) Daten zum Bilden eines aktuellen Agenten speichert.

3. System nach Anspruch 1 oder 2, das weiterhin eine Authentifizierungseinrichtung (110) umfasst, die zwischen dem Endgerät (100) und dem Server (112) angeordnet ist, wobei die Authentifizierungseinrichtung das Endgerät authentifiziert, wenn das Endgerät eine Anforderung nach den Daten des Agenten an den Server stellt.

4. System nach Anspruch 1, wobei die Kurznachricht einen Datenbereich umfasst, der eine Agentenversion, einen Agentenwachstumsschritt und einen DNA-Code enthält, der einen Agenten bildet.

5. System nach Anspruch 4, wobei die Kurznachricht weiterhin einen Router aufweist, der eine IP-Adresse eines Computers repräsentiert, der die Daten des Agenten empfängt und einen Pfad, über den die Daten des Agenten bereitgestellt werden.

6. System nach Anspruch 5, wobei die IP-Adresse auf einen Wert von 000.000.000.000 gesetzt ist und der Router auf einen Wert von 0 gesetzt ist, wenn das Endgerät eine Anforderung nach den Daten des Agenten an den Server stellt.

7. System nach Anspruch 4, wobei der Agenten-Wachstumsschritt Eigenschaften einer Mutationsagenten-Generierung, einer Hybridagenten-Generierung, bei der ein Agent in einem anderen Endgerät verwendet wird, und einer Vorschau des Mutationsagenten und des Hybridagenten enthält.

8. System nach Anspruch 7, wobei ein Benutzer des Endgeräts (100) Eigenschaften einer Mutationsagent-Generierung, einer Hybridagent-Generierung, bei der ein Agent in einem anderen Endgerät verwendet wird, und eine Vorschau des Mutationsagenten und des Hybridagenten des Agenten-Wachstumsschritts auswählt.

9. System nach einem der Ansprüche 1 bis 8, wobei bei einer Mutationsagent-Generierung das Endgerät (100) eine Mutations-DNA-Sequenz durch ein Zufallsauswahlverfahren bezüglich einiger Teile oder einer gesamten DNA-Sequenz des Agenten auswählt und Daten eines Agenten mit der Mutations-DNA-Sequenz anfordert.

10. System nach einem der Ansprüche 1 bis 8, wobei das Endgerät (100) bei einer Hybridagent-Generierung eine DNA-Sequenz eines zweiten Agenten empfängt, der dazu verwendet wird, den Hybridagenten zusammen mit dem Agenten zu generieren, zufällig einen Wert aus dem DNA-Wert des Agenten und dem empfangenen DNA-Wert des zweiten Agenten auswählt, eine Hybrid-DNA-Sequenz generiert und Daten von einem Agenten anfordert, der die generierte Hybridagent-DNA-Sequenz hat.

11. System nach einem der Ansprüche 1 bis 8, wobei, wenn eine Vorschau-Anforderung eines Agenten von dem Endgerät eingegeben wird, der Server das Endgerät mit Daten versorgt, die durch Erfassen einer Form eines Agenten von einem Typ, der durch eine entsprechende Agenten-DNA-Kombination erstellt wurde, als herkömmliche Grafikdarstellung erhalten werden.

12. Verfahren zum Berechnen eines Wachstums-/Entwicklungs-Modus eines Agenten für eine proaktive Benutzerschnittstelle in einem Endgerät, wobei die Schnittstelle dazu verwendet wird, die Aktionsmuster eines Benutzers zu lernen und adaptiv einen Vorgang entsprechend der erlernten Informationen durchzuführen, wobei das Verfahren die folgenden Schritte umfasst:
Vorbereiten eines Servers (112) zum Speichern von Daten, die Elementen des Agenten entsprechen, gemäß Versionen und Wachstumsschritten;
Anfordern der Daten (410, 514, 610), die Elementen des Agenten in dessen aktuellem Wachstums-/Entwicklungsschritt entsprechen, mithilfe einer Kurznachricht an den Server (112);
Versorgen (414, 518) des Endgeräts (100) mit Elementdaten des entsprechenden Agenten, wenn das Endgerät eine Anforderung nach den Daten von Elementen des Agenten im aktuellen Wachstums-/Entwicklungsschritt stellt;
Empfangen der Daten, die Elementen des Agenten im aktuellen Wachstums-/Entwicklungsschritt des Agenten entsprechen, von dem Server; und
Berechnen des Wachstums-/Entwicklungs-Modus des Agenten.

13. Verfahren nach Anspruch 12, wobei die Kurznachricht einen Datenbereich umfasst, der eine Agentenversion, einen Agentenwachstumsschritt und einen DNA-Code enthält, die einen Agenten bilden.

14. Verfahren nach Anspruch 13, wobei die Kurznachricht weiterhin einen Router aufweist, der eine IP-Adresse eines Computers repräsentiert, der die Daten des Agenten empfängt und einen Pfad, über den die Daten des Agenten bereitgestellt werden.

15. Verfahren nach Anspruch 14, wobei die IP-Adresse auf einen Wert von 000.000.000.000 gesetzt ist und der Router auf einen Wert von 0 gesetzt ist, wenn das Endgerät eine Anforderung der Daten des Agenten an den Server stellt.

16. Verfahren nach Anspruch 13, wobei der Wachstumsschritt Eigenschaften einer Mutationsagenten-Generierung, einer Hybridagenten-Generierung, bei der ein Agent in einem anderen Endgerät verwendet wird, und eine Vorschau des Mutationsagenten und des Hybridagenten enthält.

17. Verfahren nach Anspruch 16, wobei ein Benutzer des Endgeräts die Eigenschaften einer Mutationsagent-Generierung, einer Hybridagent-Generierung, bei der ein Agent in einem anderen Endgerät verwendet wird, und eine Vorschau des Mutationsagenten und des Hybridagenten des Agenten-Wachstumsschritts auswählt.

18. System nach einem der Ansprüche 12 bis 17, wobei bei einer Mutationsagent-Generierung das Endgerät eine Mutations-DNA-Sequenz durch ein Zufallsauswahlverfahren bezüglich einiger Teile oder einem gesamten Abschnitt einer DNA-Sequenz des Agenten auswählt und Daten eines Agenten mit der Mutations-DNA-Sequenz anfordert.

19. Verfahren nach einem der Ansprüche 12 bis 17, wobei das Endgerät bei einer Hybridagent-Generierung eine DNA-Sequenz eines zweiten Agenten empfängt, der dazu verwendet wird, den Hybridagenten zusammen mit dem Agenten zu generieren, zufällig einen DNA-Wert des Agenten und den empfangenen DNA-Wert des zweiten Agenten auswählt, eine Hybrid-DNA-Sequenz generiert und Daten von einem Agenten anfordert, der die generierte Hybridagent-DNA-Sequenz hat.

20. Verfahren nach einem der Ansprüche 12 bis 17, wobei, wenn eine Vorschau-Anforderung eines Agenten von dem Endgerät eingegeben wird, der Server das Endgerät mit Daten versorgt, die durch Erfassen einer Form eines Agenten von einem Typ, der durch eine entsprechende Agenten-DNA-Kombination erstellt wurde, als herkömmliche Grafikdarstellung erhalten werden.

## Revendications

1. Système de calcul du mode de croissance/d'évolution d'un agent pour une interface d'utilisateur proactive dans un terminal (100) où l'interface est utilisée pour apprendre les modalités d'action d'un utilisateur et pour réaliser une opération de façon adaptative en fonction des informations acquises, le système comprenant :
un serveur (112) pour enregistrer des données correspondant à des éléments de l'agent en fonction de ses versions et de ses étapes de croissance et pour fournir des données d'élément d'un agent correspondant au terminal (100) lorsque le terminal effectue une demande de données correspondant à des éléments de l'agent dans l'étape de croissance/d'évolution en cours ; et
le terminal (100) pour effectuer une demande des données de l'agent au serveur, les données correspondant à des éléments de l'agent dans l'étape de croissance/d'évolution en cours de l'agent, au moyen d'un message court, et pour recevoir du serveur les données d'éléments de l'agent dans l'étape de croissance/d'évolution en cours, permettant ainsi de calculer le mode de croissance/d'évolution de l'agent.

2. Système selon la revendication 1, dans lequel le terminal (100) enregistre des données pour constituer un agent en cours.

3. Système selon la revendication 1 ou 2, comprenant en outre un dispositif d'authentification (110) agencé entre le terminal (100) et le serveur (112), le dispositif d'authentification permettant d'authentifier le terminal lorsque le terminal effectue une demande au serveur pour les données de l'agent.

4. Système selon la revendication 1, dans lequel le message court comprend une zone de données comprenant une version d'agent, une étape de croissance d'agent et un code ADN constituant un agent.

5. Système selon la revendication 4, dans lequel le message court comprend en outre un routeur représentant une adresse IP d'un ordinateur recevant les données de l'agent et un chemin selon lequel les données de l'agent sont fournies.

6. Système selon la revendication 5, dans lequel l'adresse IP reçoit une valeur 000.000.000.000 et le routeur est réglé pour recevoir une valeur 0 lorsque le terminal effectue une demande au serveur pour les données de l'agent.

7. Système selon la revendication 4, dans lequel l'étape de croissance de l'agent comprend des propriétés de génération d'un agent de mutation, de génération d'un agent hybride avec un agent utilisé dans un autre terminal et de prévisualisation de l'agent de mutation et de l'agent hybride.

8. Système selon la revendication 7, dans lequel un utilisateur du terminal (100) sélectionne des propriétés de génération d'un agent de mutation, de génération d'un agent hybride avec un agent utilisé dans un autre terminal et de prévisualisation de l'agent de mutation et de l'agent hybride de l'étape de croissance de l'agent.

9. Système selon l'une des revendications 1 à 8 dans lequel, lors de la génération d'un agent de mutation, le terminal (100) génère une séquence ADN de mutation via un procédé de sélection aléatoire à partir de certaines sections d'une séquence ADN de l'agent ou à partir de la séquence entière, et demande des données d'un agent ayant la séquence ADN de mutation.

10. Système selon l'une des revendications 1 à 8 dans lequel, lors de la génération d'un agent hybride, le terminal (100) reçoit une séquence ADN d'un second agent, qui est utilisé pour la génération de l'agent hybride conjointement avec l'agent, sélectionne aléatoirement une valeur d'ADN de l'agent et la valeur d'ADN reçue du second agent, génère une séquence ADN hybride et demande des données d'un agent ayant la séquence ADN d'agent hybride générée.

11. Système selon l'une des revendications 1 à 8 dans lequel, lorsqu'une demande de prévisualisation d'un agent est entrée depuis le terminal, le serveur procure au terminal des données obtenues par capture d'une forme d'un agent d'un type complété par une combinaison ADN d'un agent correspondant sous forme d'une image graphique conventionnelle.

12. Procédé de calcul d'un mode de croissance/d'évolution d'un agent pour une interface d'utilisateur proactive dans un terminal, où l'interface est utilisée pour apprendre les modalités d'action d'un utilisateur et pour réaliser une opération de façon adaptative en fonction des informations acquises, le procédé comprenant les étapes consistant à :
préparer un serveur (112) pour enregistrer des données correspondant aux éléments de l'agent en fonction de versions et d'étapes de croissance ;
demander au serveur (112) les données (410, 514, 610) correspondant à des éléments de l'agent dans son étape de croissance/d'évolution en cours au moyen d'un message court ;
fournir (414, 518) au terminal (100) des données d'élément de l'agent correspondant lorsque le terminal effectue une demande de données correspondant à des éléments de l'agent dans l'étape de croissance/d'évolution en cours ;
recevoir du serveur les données correspondant à des éléments de l'agent dans l'étape de croissance/d'évolution en cours de l'agent ; et
calculer le mode de croissance/d'évolution de l'agent.

13. Procédé selon la revendication 12, dans lequel le message court comprend une zone de données comprenant une version d'agent, une étape de croissance d'agent et un code ADN constituant un agent.

14. Procédé selon la revendication 13, dans lequel le message court comprend en outre un routeur représentant une adresse IP d'un ordinateur recevant les données de l'agent et un chemin selon lequel les données de l'agent sont fournies.

15. Procédé selon la revendication 14, dans lequel l'adresse IP reçoit une valeur 000.000.000.000 et le routeur est réglé pour recevoir une valeur 0 lorsque le terminal effectue une demande au serveur pour les données de l'agent.

16. Procédé selon la revendication 13, dans lequel l'étape de croissance comprend des propriétés de génération d'un agent de mutation, de génération d'un agent hybride avec un agent utilisé dans un autre terminal et de prévisualisation de l'agent de mutation et de l'agent hybride.

17. Procédé selon la revendication 16, dans lequel un utilisateur du terminal sélectionne les propriétés de génération d'un agent de mutation, de génération d' un agent hybride avec un agent utilisé dans un autre terminal et de prévisualisation de l'agent de mutation et de l'agent hybride de l'étape de croissance de l'agent.

18. Procédé selon l'une des revendications 12 à 17 dans lequel, lors de la génération d'un agent de mutation, le terminal génère une séquence ADN de mutation via un procédé de sélection aléatoire à partir de certaines sections d'une séquence ADN de l'agent ou à partir de la séquence entière, et demande des données d'un agent ayant la séquence ADN de mutation.

19. Procédé selon l'une des revendications 12 à 17 dans lequel, lors de la génération d'un agent hybride, le terminal reçoit une séquence ADN d'un second agent, qui est utilisé pour la génération de l'agent hybride conjointement avec l'agent, sélectionne aléatoirement une valeur d'ADN de l'agent et la valeur d'ADN reçue du second agent, génère une séquence ADN hybride et demande des données d'un agent ayant la séquence ADN d'agent hybride générée.

20. Procédé selon l'une des revendications 12 à 17 dans lequel, lorsqu'une demande de prévisualisation d'un agent est entrée depuis le terminal, le serveur procure au terminal des données obtenues par capture d'une forme d'un agent d'un type complété par une combinaison ADN d'un agent correspondant sous forme d'une image graphique conventionnelle.
